(19)

Europäisches Patentamt
European Patent Office
Office européen des brevets

(11) **EP 3 981 834 A1**

(12) **EUROPEAN PATENT APPLICATION**
published in accordance with Art. 153(4) EPC

(43) Date of publication:
**13.04.2022 Bulletin 2022/15**

(21) Application number: **20823231.4**

(22) Date of filing: **09.06.2020**

(51) International Patent Classification (IPC):
*C08L 59/00* (2006.01)     *C08L 77/06* (2006.01)

(52) Cooperative Patent Classification (CPC):
**C08L 59/00; C08L 77/06**

(86) International application number:
**PCT/JP2020/022718**

(87) International publication number:
**WO 2020/250895 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2019 JP 2019108192**

(71) Applicant: **Asahi Kasei Kabushiki Kaisha Tokyo 1000006 (JP)**

(72) Inventors:
• **KAWAHARA Makoto Tokyo 100-0006 (JP)**
• **SASAKI Yukiyoshi Tokyo 100-0006 (JP)**

(74) Representative: **Hoffmann Eitle Patent- und Rechtsanwälte PartmbB Arabellastraße 30 81925 München (DE)**

(54) **POLYACETAL RESIN COMPOSITION**

(57)     The present disclosure is directed to provide a polyacetal resin composition which reduces mold contaminations, formaldehyde released from molded articles, and occurrence of foreign matters in the molded articles, even when the molded articles are produced under conditions where the materials are exposed to a high temperature for long time. A polyacetal resin composition of the present disclosure contains: a polyacetal resin (A); and a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

EP 3 981 834 A1

**Description**

TECHNICAL FIELD

The present disclosure relates to a polyacetal resin composition.

BACKGROUND

Polyacetal resins are crystalline resins which are excellent in rigidity, strength, tenacity, sliding property, and creep property. They therefore have conventionally been used in a wide variety of fields as materials for mechanical parts, such as automotive parts, electrical and electronic parts, and industrial parts.
Various techniques have been proposed for improving the thermal stability of polyacetal resins, and example of such techniques include, for example, a method by adding a polyamide oligomer to a polyacetal resin (see, for example, PTL 1 below) and a method by adding a polyamide having an aromatic ring and magnesium hydroxide to a polyacetal resin (see, for example, PTL 2 below).

CITATION LIST

Patent Literature

[0004]

　　　PTL 1: JP S50-145458 A
　　　PTL 2: JP 2013-32416 A

SUMMARY

(Technical Problem)

For molding of parts made of a polyacetal resins, cold runner molds are generally used. In molding by means of a cold runner mold, however, other than intended molded articles, unnecessary runner portions are also molded. As a result, the unnecessary runner portions need to be disposed, or need to be rework-molded after being pulverized by a pulverizer etc. and adding a small amount of the pulverized runner portions to raw material polyacetal resin pellets and the like.
Runner portions are subjected to thermal history by molding at least once. This may affect the fluidity or the thermal stability of the resin in a molding machine cylinder upon rework of the runner portions. This may cause mold defects such as burring and warpage, making stable production difficult. Under these circumstances, there is recently a growing tendency to select hot runner molds for molding of parts made of polyacetal resins for the purpose of improving the production stability and reducing the production costs.
Upon continuous molding by means of a hot runner mold, the temperature of a manifold (the part where a molten resin resides; the hot runner portion) in a mold is generally set to a temperature higher than the temperature of a molding machine cylinder. Thus, a polyacetal resin is required to have a higher thermal stability than in continuously molding by means of a cold runner mold.
In particular, in the case of continuous molding by means of a hot runner mold, a resin composition resides in the high-temperature hot runner manifold part for long time. This promotes thermal decomposition of a polyacetal resin, resulting in problems such as reduction in the low VOC property during long-time molding, contamination of the inner cavity of a mold by mold deposits during long-time continuous molding, and occurrence of foreign matters.
These, however, issues have not been addressed yet, and continuous molding by means of hot runner molds has suffered from mold contaminations, formaldehyde release, and occurrence of foreign matters.
Therefore, it would be helpful to provide a polyacetal resin composition which reduces mold contaminations, and reduces formaldehyde release and occurrence of foreign matters in molded articles even when molded articles are produced under conditions in which the materials are exposed to a high temperature for long time.

(Solution to Problem)

We have conducted diligent researches to solve the problems of the aforementioned conventional art, and have found out that the above-described problems can be solved by blending, into a polyacetal resin, a certain semi-aromatic polyamide resin which contains a dicarboxylic acid unit containing an isophthalic acid unit and a diamine unit containing a diamine unit having a carbon number of 4 to 10, to thereby complete the present disclosure.

The present disclosure are hence as follows.

(1) A polyacetal resin composition comprising:

a polyacetal resin (A); and
a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

(2) The polyacetal resin composition according to (1), wherein a content of the semi-aromatic polyamide resin (B) is 0.01 part by mass or more and 1.00 part by mass or less with respect to 100 parts by mass of the polyacetal resin (A).
(3) The polyacetal resin composition according to (1) or (2), wherein the semi-aromatic polyamide resin (B) is an amorphous polyamide.
(4) The polyacetal resin composition according to any one of (1) to (3), wherein the polyamide resin (B) is polyamide 6I.
(5) The polyacetal resin composition according to any one of (1) to (4), wherein the semi-aromatic polyamide (B) has a number average molecular weight Mn of 5,000 or more and 20,000 or less.
(6) The polyacetal resin composition according to any of (1) to (5), wherein the polyacetal resin (A) has a number average molecular weight Mn of is 75,000 or more and 150,000 or less.
(7) The polyacetal resin composition according to any of (1) to (6), wherein the polyacetal resin (A) is a homopolymer.
(8) The polyacetal resin composition according to any one of (1) to (7), wherein the polyacetal resin composition contains 0.01 parts by mass or more and 0.50 parts by mass of the polyamide resin (B) with respect to 100 parts by mass of the polyacetal resin (A).
(9) A production method of a polyacetal resin composition comprising:
adding, to a polyacetal resin (A), a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.
(10) A thermal stabilization method of a polyacetal resin comprising:
adding, to a polyacetal resin (A), a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

(Advantageous Effect)

According to the present disclosure, it is possible to provide a polyacetal resin composition which reduces mold contaminations, formaldehyde released from molded articles, and occurrence of foreign matters even when the molded articles are produced under conditions where the materials are exposed to a high temperature for long time.

BRIEF DESCRIPTION OF THE DRAWINGS

In the accompanying drawings:

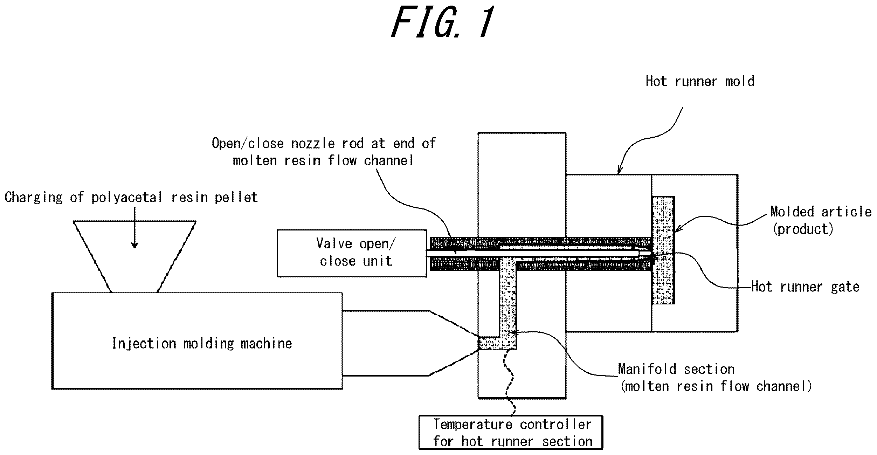

FIG. 1 illustrates a schematic diagram of a hot runner mold molding machine used in examples.

DETAILED DESCRIPTION

The following provides a detailed description of an embodiment of the present disclosure (hereinafter, referred to as the "present embodiment"). Note that the present disclosure is not limited to the following embodiment and may be implemented with various alterations that are within the essential scope thereof.

(Polyacetal resin composition)

A polyacetal resin composition of the present embodiment contains: a polyacetal resin (A); and a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less (hereinafter, sometimes simply referred to as "semi-aromatic polyamide resin (B)").

First, components that may be contained in the polyacetal resin composition of the present embodiment will be described.

[(A) Polyacetal resin]

The polyacetal resin (A) contained in the polyacetal resin composition of the present embodiment refers to a polymer having an oxymethylene group in the main chain. Examples of the polyacetal resin (A) include polyacetal homopolymers consisting essentially of an oxymethylene unit, obtained through homopolymerization of formaldehyde monomer or a cyclic oligomer of formaldehyde such as trimer (trioxane) or tetramer (tetraoxane) thereof; polyacetal copolymers obtained through copolymerization of formaldehyde monomer or a cyclic oligomer of formaldehyde such as trimer (trioxane) or tetramer (tetraoxane) thereof, with a cyclic ether or a cyclic formal, such as ethylene oxide, propylene oxide, epichlorohydrin, 1,3-dioxolane, and cyclic formals of glycol or diglycol, e.g., 1,4-butanediol formal; branched polyacetal copolymers obtained through copolymerization of a monofunctional glycidyl ether; and polyacetal copolymers with a crosslinked structure obtained through copolymerization of a multifunctional glycidyl ether.

Alternatively, the polyacetal resin (A) may be a polyacetal homopolymer having a block component obtained through polymerization of formaldehyde monomer or a cyclic oligomer of formaldehyde such as trimer (trioxane) or tetramer (tetraoxane) thereof, in the presence of a compound having a functional group e.g., a hydroxyl group at the both terminals or one terminal, such as polyalkylene glycol; or a polyacetal homopolymer having a block component obtained through polymerization of formaldehyde monomer or a cyclic oligomer of formaldehyde such as trimer (trioxane) or tetramer (tetraoxane) thereof, with a cyclic ether or a cyclic formal, in the presence of a compound similarly having functional groups e.g., hydroxyl groups at the both terminals or one terminal, such as hydrogenated polybutadiene glycol.

One of such polyacetal resins may be used alone, or two or more of such polyacetal resins may be used in combination.

As described above, both polyacetal homopolymers and polyacetal copolymers can be used as the polyacetal resin (A). Of these, however, polyacetal homopolymers are preferred from the viewpoint of the mechanical properties.

In the present embodiment, the degree of polymerization and the comonomer content of the polyacetal resin (A) are not particularly limited.

<Polyacetal homopolymer>

A polyacetal homopolymer as described above can be produced, for example, by feeding formaldehyde as a monomer, a chain transfer agent (molecular weight regulating agent), and a polymerization catalyst, into a polymerization reactor to which a hydrocarbon-based polymerization solvent has been charged, and polymerizing the monomer by the slurry polymerization method.

The raw material monomer, the chain transfer agent, and the polymerization catalyst may contain substances having chain transferring capability (substances that generate unstable terminal groups), such as water, methanol, and formic acid. In this process, therefore, it is preferable to adjust the content of such substances having chain transferring capability in advance. The content of such substances having chain transferring capability preferably ranges from 1 to 1000 mass ppm, more preferably from 1 to 500 mass ppm, and even more preferably from 1 to 300 mass ppm, with respect to the total mass of formaldehyde as a monomer. By adjusting the content of the substances having chain transferring capability to any of the above ranges, a polyacetal homopolymer excellent in thermal stability can be produced.

The molecular weight of the polyacetal homopolymer can be adjusted by inducing chain transfers by means of a molecular weight modifier such as a carboxylic anhydride or a carboxylic acid. Particularly, the molecular weight modifier is preferably propionic anhydride or acetic anhydride, and more preferably acetic anhydride.

The amount of the molecular weight modifier to be charged is determined and adjusted according to the properties (in particular, the melt flow rate) of the intended polyacetal homopolymer.

The polymerization catalyst is preferably an anionic polymerization catalyst, and more preferably an onium salt-based polymerization catalyst represented by the following general formula (I).

$$[R_1R_2R_3R_4M]^+X^- . \qquad (I)$$

(In Formula (I), $R_1$, $R_2$, $R_3$, and $R_4$ each independently represent an alkyl group, M represents an element having a lone electron pair, and X represents a nucleophilic group.

One polymerization catalyst may be used alone, or two or more polymerization catalysts may be used in combination.

Among onium salt-based polymerization catalysts, preferred are quaternary phosphonium salt-based compounds such as tetraethyl phosphonium iodide and tributylethyl phosphonium iodide, and quaternary ammonium salt-based compounds such as tetramethyl ammonium bromide and dimethyl distearyl ammonium acetate.

The amount of such an onium salt-based polymerization catalyst added, such as quaternary phosphonium salt-based compounds and quaternary ammonium salt-based compounds, is preferably from 0.0003 to 0.01 mol, more preferably from 0.0008 to 0.005 mol, and even more preferably from 0.001 to 0.003 mol, per 1 mol of formaldehyde.

The hydrocarbon-based polymerization solvent may be any solvents which do not react with formaldehyde. Examples thereof include, but are not particularly limited to, pentane, isopentane, hexane, cyclohexane, heptane, octane, nonane, decane, and benzene, and hexane is particularly preferred. One of such hydrocarbon-based polymerization solvent may be used alone, or two or more of such hydrocarbon-based polymerization solvents may be used in combination.

Upon production of the polyacetal homopolymer, preferably, a crude polyacetal homopolymer is produced through polymerization, followed by stabilization treatment on unstable terminal groups, as will be described below.

A polymerization reactor for producing the crude polyacetal homopolymer is not particularly limited, and any reactors may be used as long as they are capable of simultaneously feeding formaldehyde as a monomer, the chain transfer agent (molecular weight regulating agent), and the polymerization catalyst, as well as the hydrocarbon-based polymerization solvent. From the viewpoint of the productivity, a continuous polymerization reactor is preferred.

The crude polyacetal homopolymer obtained through the polymerization has terminal groups which are thermally unstable. It is therefore preferable to stabilize the unstable terminal groups by blocking them with an esterifying agent, an etherifying agent, or the like.

The stabilization treatment on terminal groups in the crude polyacetal homopolymer through esterification can be carried out, for example, by feeding the crude polyacetal homopolymer, an esterifying agent, and an esterification catalyst into a terminal stabilization reactor to which a hydrocarbon solvent has been charged, and inducing reaction. With regard to the reaction temperature and the reaction time in this process, for example, a reaction temperature from 130 to 155 °C and a reaction time from 1 to 100 minutes are preferred, a reaction temperature from 135 to 155 °C and a reaction time from 5 to 100 minutes are more preferred, a reaction temperature from 140 to 155 °C and a reaction time from 10 to 100 minutes are even more preferred.

As the esterifying agent for blocking terminal groups in the crude polyacetal homopolymer to thereby stabilize the terminal groups, an acid anhydride represented by the following general formula (II) can be used.

$$R_5COOCOR_6 . \qquad (II)$$

(In Formula (II), $R_5$ and $R_6$ each independently represent an alkyl group. $R_5$ and $R_6$ may be the same or different from each other).

Examples of the esterifying agent include, but are not limited to: benzoic anhydride, succinic anhydride, maleic anhydride, glutaric anhydride, phthalic anhydride, propionic anhydride, and acetic anhydride, among which acetic anhydride is preferred. One of these esterifying agent may be used alone, or two or more of these esterifying agents may be used in combination.

The esterification catalyst is preferably an alkali metal salt of a carboxylic acid having a carbon number of 1 to 18, and the amount of the alkali metal salt added can be selected from a range from 1 to 1000 mass ppm with respect to the mass of the polyacetal homopolymer. Examples of the alkali metal salt of the carboxylic acid having a carbon number of 1 to 18 include, but are not limited to: alkali metal salts of formic acid, acetic acid, propionic acid, butyric acid, valeric acid, caprylic acid, enanthic acid, caprylic acid, pelargonic acid, capric acid, lauric acid, myristic acid, palmitic acid, margaric acid, and stearic acid. Examples of the alkali metal include lithium, sodium, potassium, rubidium, and cesium. Among these alkali metal salts of carboxylic acids, lithium acetate, sodium acetate, and potassium acetate are preferred.

The etherifying agent for blocking to stabilize terminal groups in the crude polyacetal homopolymer can be selected from orthoesters of aliphatic or aromatic acids with aliphatic, alicyclic, or aromatic alcohols, such as methyl orthoformate or ethyl orthoformate, methyl orthoacetate or ethyl orthoacetate, methyl orthobenzoate or ethyl orthobenzoate, and orthocarbonates, specifically ethyl orthocarbonate. The terminal groups can be stabilized using Lewis acid catalysts, *e.g.,* organic acids having an intermediate acidity, such as *p*-toluenesulfonic acid, acetic acid, and oxalic acid, and mineral acids having an intermediate acidity such as dimethyl sulfate and diethyl sulfate.

Examples of the solvent used in the etherification reaction for blocking to stabilize terminal group of the crude polyacetal homopolymer through etherification include, but are not limited to: organic solvents, e.g., aliphatic organic solvents having a low boiling point such as pentane, hexane, cyclohexane, and benzene; alicyclic and aromatic hydrocarbon organic solvents; and halogenated lower fatty acids such as methylene chloride, chloroform, and carbon tetrachloride.

The polyacetal homopolymer in which terminal groups have been stabilized by the above-described method is dried by using a dryer such as a hot air dryer or a vacuum dryer to send the air or nitrogen gas adjusted to 100 to 150 °C for removing water, to thereby obtain the polyacetal homopolymer as the polyacetal resin (A).

<Polyacetal copolymer>

First, the materials used in production of a polyacetal copolymer, specifically, trioxane, a cyclic ether and/or a cyclic formal, a polymerization catalyst, a low molecular weight acetal compound, and an organic solvent, will be described.

-Trioxane-

Trioxane is a cyclic trimer of formaldehyde, and is typically produced through a reaction of an aqueous solution of formalin in the presence of an acidic catalyst.

Because trioxane may contain impurities having chain transferring capability, such as water, methanol, formic acid, methyl formate, and other impurities, these impurities are preferably removed to purify trioxane by means of distillation, for example. In the purification, the total amount of impurities having chain transferring capability is preferably reduced to $1 \times 10^{-3}$ mol or less, and more preferably to $0.5 \times 10^{-3}$ mol or less, per 1 mol of trioxane. By reducing the total amount of impurities to any of the above upper limits or lower, the rate of the polymerization reaction can be increased sufficiently for practical use and an excellent thermal stability can be imparted to a resultant polymer.

-Cyclic ether and/or cyclic formal-

A cyclic ether and/or cyclic formal are substances that can be copolymerized with the trioxane, and examples thereof includes ethylene oxide, propylene oxide, butylene oxide, epichlorohydrin, epibromohydrin, styrene oxide, oxatane, 1,3-dioxolane, ethylene glycol formal, propylene glycol formal, diethylene glycol formal, triethylene glycol formal, 1,4-butanediol formal, 1,5-pentanediol formal and 1,6-hexanediol formal. Among these cyclic ethers and/or cyclic formals, preferred are 1,3-dioxolane and 1,4-butanediol formal. They may be used alone or in a combination of two or more.

The amount of the cyclic ether and/or cyclic formal added is preferably in a range from 1 to 20 mol%, more preferably in a range from 1 to 15 mol%, even more preferably in a range from 1 to 10 mol%, and further preferably in a range from 1 to 5 mol%, per 1 mol of the trioxane.

-Polymerization catalyst-

Examples of the polymerization catalysts include boric acid, tin, titanium, phosphorus, arsenic and antimony compounds represented by Lewis acids, and in particular, preferred are boron trifluoride, boron trifluoride hydrates, and coordination complex compounds of boron trifluoride with organic compounds containing oxygen or sulfur atoms. For example, boron trifluoride, boron trifluoride diethyl etherate, and boron trifluoride-di-n-butyl etherate are exemplified as suitable examples. They may be used alone or in a combination of two or more.

The amount of the polymerization catalyst added is preferably in a range from $0.1 \times 10^{-5}$ to $0.1 \times 10^{-3}$ mol, more preferably in a range from $0.3 \times 10^{-5}$ to $0.3 \times 10^{-4}$ mol, and even more preferably in a range from $0.5 \times 10^{-5}$ to $0.15 \times 10^{-4}$ mol, per 1 mol of trioxane. When the amount of polymerization catalyst added is within any of the above ranges, a long-time polymerization reaction can be stably carried out.

-Low molecular weight acetal compound-

The low molecular weight acetal compound functions as a chain transfer agent in a polymerization reaction, and is an acetal compound having a molecular weight of 200 or less, preferably from 60 to 170. Specifically, methoxymethylal, dimethoxymethylal, and trimethoxymethylal are exemplified as suitable examples. They may be used alone or in a combination of two or more.

The amount of the low molecular weight acetal compound added is preferably in a range from $0.1 \times 10^{-4}$ to $0.6 \times 10^{-2}$ mol per 1 mol of trioxane, from the viewpoint of controlling the molecular weight of the polymer to fall within a suitable range.

-Organic solvent-

The organic solvent is not particularly limited unless it is involved in the polymerization reaction or has adverse effects on the polymerization reaction. Examples thereof include aromatic hydrocarbons such as benzene (boiling point: 80 °C), toluene (boiling point: 110.63 °C), and xylene (boiling point: 144 °C); aliphatic hydrocarbons such as *n*-hexane (boiling point: 69 °C), *n*-heptane (boiling point: 98 °C), and cyclohexane (boiling point: 80.74 °C); halogenated hydrocarbons such as chloroform (boiling point: 61.2 °C), dichloromethane (boiling point: 40 °C), and carbon tetrachloride (boiling point: 76.8 °C); and ethers such as diethyl ether (boiling point: 35 °C), diethylene glycol dimethyl ether (boiling point: 162 °C), and 1,4-dioxane (boiling point: 101.1 °C). In particular, from the viewpoint of reducing tar-like precipitates, aliphatic hydrocarbons such as *n*-hexane, *n*-heptane, and cyclohexane are exemplified as suitable examples. One of these organic solvent may be used alone, or two or more of these organic solvent may be used in combination.

The amount of the organic solvent added is preferably in a range from $0.1 \times 10^{-3}$ to $0.2$ mol, more preferably in a range from $0.2 \times 10^{-3}$ to $0.5 \times 10^{-1}$ mol, and even more preferably in a range from $0.5 \times 10^{-3}$ to $0.3 \times 10^{-1}$, per 1 mol of trioxane. When the amount of organic solvent added is within any of the above ranges, a polyacetal copolymer excellent in productivity can be obtained.

-Polymerization of polyacetal copolymer-

Examples of the polymerization method of the polyacetal copolymer include, but are not particularly limited to, the bulk polymerization method and the melt polymerization method, for example, in addition to the slurry polymerization method described above with regard to production of the polyacetal homopolymer. The polymerization of polyacetal copolymer can be achieved by the batch or continuously.

Examples of a polymerization reactor include, but are not particularly limited to, self-cleaning extrusion kneaders such as a co-kneader, a twin screw continuous extrusion kneader, and a twin screw paddle continuous mixer. Such an apparatus is preferably provided with a jacket through which a heat medium can be introduced.

After the raw materials are fed to the polymerization reactor, the temperature of the polymerization reactor is maintained preferably at a temperature from 63 to 135 °C, more preferably within a range from 70 to 120 °C, and even more preferably within a range from 70 to 100 °C during the polymerization reaction. The residence (reaction) time in the polymerization reactor is preferably from 0.1 to 30 minutes, more preferably from 0.1 to 25 minutes, and even more preferably from 0.1 to 20 minutes. When the temperature and residence time in the polymerization reactor are within any of the above ranges, a stable polymerization reaction is likely to be continued.

A crude polyacetal copolymer is produced through a polymerization reaction. To deactivate the polymerization catalyst, for example, the crude polyacetal copolymer discharged from the polymerization reactor is charged into an aqueous solution or an organic solution containing at least one neutralizing deactivator, such as ammonia, amines, e.g., triethylamine and tri-*n*-butylamine, hydroxides of alkali metals or alkaline earth metals, inorganic salts, and organic acid salts, and the crude polyacetal copolymer is continuously stirred in a slurry state for several minutes to several hours at a temperature ranging from room temperature to 100 °C or lower. In this step, in the case where the crude polyacetal copolymer is a large mass, the crude polyacetal copolymer is preferably pulverized after the polymerization, prior to a further process. Filtration by a centrifuge and drying under nitrogen yield a polyacetal copolymer.

The resultant polyacetal copolymer may have thermally unstable end sites ($-(OCH_2)_n$-OH groups) (hereinafter, such a polyacetal copolymer may be referred to as "polyacetal copolymer prior to terminal stabilization"). Therefore, it is preferable to carry out the decomposition and removal treatment (terminal stabilization) of such unstable terminal sites using a terminal stabilizer. Examples of the terminal stabilizer include, but are not particularly limited to, basic substances including: aliphatic amine compounds such as ammonia, triethylamine, and tributylamine; hydroxides of alkali metals or alkaline earth metals, such as sodium, potassium, magnesium, calcium, or barium; inorganic weak acid salts of alkali metals or alkaline earth metals, such as carbonates, phosphates, silicates, and borates; and organic acid salts of alkali metals or alkaline earth metals, such as formates, acetates, stearates, palmitates, propionates, and oxalates. Among them, aliphatic amine compounds are preferred, and triethylamine is more preferred.

Examples of the method for decomposition and removal of the unstable terminal sites include, but are not particularly limited to, a method by heat-treating the polyacetal copolymer in a molten state at a temperature equal to or higher than the melting point of the polyacetal copolymer and equal to or lower than 260 °C in the presence of a terminal stabilizer such as triethylamine. The heat treatment is achieved, for example, by using a single screw or twin screw extruder equipped with a vent decompression device. A twin screw extruder is preferably used.

The polyacetal copolymer in which the end sites have been stabilized by the above-described method is dried by using a dryer such as a hot air dryer or a vacuum dryer to send the air or nitrogen gas adjusted to 100 to 150 °C for removing water, to thereby obtain a polyacetal copolymer as the polyacetal resin (A).

The polyacetal resin has a melt flow rate (MFR value in accordance with ISO 1133) of preferably from 0.1 to 100 g/10 min, and more preferably from 0.5 g/10 min to 70 g/10 min. By adjusting the MFR value of the polyacetal resin to be within any of the above ranges, a polyacetal resin excellent in mechanical strength can be obtained.

The polyacetal resin has a number average molecular weight Mn of preferably 25,000 or more, more preferably 50,000 or more, even more preferably 60,000 or more, particularly preferably 70,000 or more, and most preferably from 75,000 or more, from the viewpoint of reducing the warpage property of a molded article. Although the upper limit is not particularly limited, the number average molecular weight Mn is preferably 150,000 or less, more preferably 140,000 or less, even more preferably 130,000 or less, and particularly preferably 120,000 or less, for facilitating of molding. The most preferred range is 75,000 or more and 120,000 or less. By adding a semi-aromatic polyamide resin (B) to a polyacetal resin having a number average molecular weight Mn in any of the above ranges, a molded article with reduced warpage can be obtained.

The content of the polyacetal resin is preferably 50 mass% or more, more preferably 60 mass% or more, and even more preferably 70 mass% or more, with respect to 100 mass% of the polyacetal resin composition, from the viewpoint of achieving excellent properties of an engineering resin.

[(B) Semi-aromatic polyamide resin]

The semi-aromatic polyamide resin (B) contained in the polyacetal resin composition of the present embodiment is a semi-aromatic polyamide resin which contains a dicarboxylic acid unit containing at least 75 mol% of an isophthalic acid unit and a diamine unit containing at least 50 mol% of a diamine unit having a carbon number of 4 to 10, and has a number average molecular weight Mn of 3,000 or more and 20,000 or less.

In this specification, the term "polyamide" refers to a polymer having amide (-NHCO-) bonds in the main chain. The semi-aromatic polyamide resin will be described in detail below.

(Dicarboxylic acid unit)

The dicarboxylic acid unit may include an aromatic dicarboxylic acid unit, an aliphatic dicarboxylic acid unit, and an alicyclic dicarboxylic acid unit, in addition to an isophthalic acid unit.

-Aromatic dicarboxylic acid unit-

Examples of the aromatic dicarboxylic acid constituting the aromatic dicarboxylic acid unit other than the isophthalic acid unit include, but are not limited to: dicarboxylic acids having a phenyl group or a naphthyl group. The aromatic group of the aromatic dicarboxylic acid may be unsubstituted or may have a substituent.

Examples of the substituent include, but are not particularly limited to, alkyl groups having a carbon number of 1 to 4, aryl groups having a carbon number of 6 to 10, arylalkyl groups having a carbon number of 7 to 10, halogen groups such as chloro and bromo groups, silyl groups having a carbon number of 1 to 6, and sulfonic acid groups and salts (such as sodium salt) thereof.

Examples of the aromatic dicarboxylic acid include, but are not limited to: aromatic dicarboxylic acids which have a carbon number of 8 to 20 and are unsubstituted or substituted with a certain substituent, such as terephthalic acid, naphthalenedicarboxylic acid, 2-chloroterephthalic acid, 2-methylterephthalic acid, 5-methylisophthalic acid, and sodium 5-sulfoisophthalic acid, and preferred are unsubstituted or substituted aromatic dicarboxylic acids having a carbon number of 6 to 12. Among these, terephthalic acid is preferred.

One aromatic dicarboxylic acid may be used alone, or two or more aromatic dicarboxylic acids may be used in combination for constituting the aromatic dicarboxylic acid unit.

-Aliphatic dicarboxylic acid unit-

Examples of the aliphatic dicarboxylic acid constituting the aliphatic dicarboxylic acid unit include, but are not limited to: linear or branched saturated aliphatic dicarboxylic acids having a carbon number of 3 to 20, such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberinic acid, azelaic acid, sebacic acid, dodecanedioic acid, tetradecanedioic acid, hexadecanedioic acid, octadecanedioic acid, eicosanedioic acid, and diglycol. From the viewpoint of the heat resistance, adipic acid is preferred.

One aliphatic dicarboxylic acid may be used alone, or two or more aliphatic dicarboxylic acids may be used in combination for constituting the aliphatic dicarboxylic acid unit.

-Alicyclic dicarboxylic acid unit-

Examples of the alicyclic dicarboxylic acid constituting the alicyclic dicarboxylic acid unit (hereinafter referred to as the "alicyclic dicarboxylic acid unit") include, but are not limited to: alicyclic dicarboxylic acids having an alicyclic structure with a carbon number of 3 to 10, and alicyclic dicarboxylic acids having an alicyclic structure with a carbon number of 5 to 10 are preferred.

Examples of the alicyclic dicarboxylic acid include, but are not limited to: 1,4-cyclohexane dicarboxylic acid, 1,3-cyclohexane dicarboxylic acid, and 1,3-cyclopentane dicarboxylic acid. Among these, 1,4-cyclohexane dicarboxylic acid is preferred.

One alicyclic dicarboxylic acid may be used alone, or two or more alicyclic dicarboxylic acids may be used in combination for constituting the alicyclic dicarboxylic acid unit.

The alicyclic group in the alicyclic dicarboxylic acid may be unsubstituted or may have a substituent. Examples of the substituent include, but are not limited to: alkyl groups having a carbon number of 1 to 4, such as methyl group, ethyl group, *n*-propyl group, isopropyl group, *n*-butyl group, isobutyl group, and *tert*-butyl group.

The dicarboxylic acid unit other than the isophthalic acid unit preferably contains an aromatic dicarboxylic acid unit, and more preferably an aromatic dicarboxylic acid having a carbon number of 6 or more and 12 or less.

The dicarboxylic acid unit contains 75 mol% or more, more preferably from 80 to 100 mol%, and even more preferably from 90 to 100 mol%, of an isophthalic acid unit (on the basis of the total moles of the dicarboxylic acid unit).

Note that, in this specification, the ratio of the certain monomer units constituting the semi-aromatic polyamide resin can be measured by techniques such as the nuclear magnetic resonance spectroscopy (NMR).

(Diamine unit)

The diamine unit constituting the semi-aromatic polyamide resin (B) contains at least 50 mol% of a diamine having a carbon number of 4 to 10.

Examples of the diamine having a carbon number of 4 to 10 include, for example, an aliphatic diamine unit, an alicyclic diamine unit, and an aromatic diamine unit.

- Aliphatic diamine unit -

Examples of the aliphatic diamine constituting the aliphatic diamine unit include, but are not limited to: linear saturated aliphatic diamine having a carbon number of 4 to 10, such as tetramethylene diamine, pentamethylene diamine, hexamethylene diamine, heptamethylene diamine, octamethylene diamine, nonamethylene diamine, and decamethylene diamine.

- Alicyclic diamine unit -

Examples of the alicyclic dicarboxylic acid constituting the aliphatic diamine unit (hereinafter, referred to as "aliphatic diamine") include, but are not limited to: 1,4-cyclohexane diamine, 1,3-cyclohexane diamine, and 1,3-cyclopentane diamine.

-Aromatic diamine unit-

The aromatic diamine constituting the aromatic diamine unit is not limited as long as it is a diamine containing an aromatic group, and is exemplified by, for example, meta-xylene diamine.

Among diamine units which can constitute the semi-aromatic polyamide resin (B), aliphatic diamine unita are preferred. More preferred are diamine units having a linear saturated aliphatic group having a carbon number of 4 to 10, such as tetramethylene diamine (carbon number: 4), pentamethylene diamine (carbon number: 5), hexamethylene diamine (carbon number: 6), heptamethylene diamine (carbon number: 7) octamethylene diamine (carbon number: 8), nonamethylene diamine (carbon number: 9), and decamethylene diamine (carbon number: 10). Even more preferred are diamine units having a linear saturated aliphatic group having a carbon number of 6 to 10, and still even more preferred is hexamethylene diamine.

Note that one diamine may be used alone, or two or more diamines may be used in combination.

The diamine unit contains 50 mol% or more, preferably 75 mol% or more of a diamine unit having a carbon number of 4 to 10, with respect 100 mol% of the total amount of all diamine units, and particularly preferably consists only of a diamine unit having a carbon number of 4 to 10.

The sum of the molar ratios of the dicarboxylic acid unit and the diamine unit is preferably 80 mol% or more, and more preferably 100 mol%, with respect to 100 mol% of the total amount of all monomer units constituting the semi-aromatic polyamide resin.

The sum of the amounts of the isophthalic acid unit and the diamine unit having a carbon number of 4 to 10 is preferably from 80 to 100%, more preferably from 90 to 100%, and even more preferably 100%, with respect to 100 mol% of all constituent units constituting the semi-aromatic polyamide resin.

The molar ratios of the dicarboxylic acid unit and the molar ratio of the diamine unit, to 100 mol% of all monomer units constituting the semi-aromatic polyamide resin are preferably from 40 to 60 mol%, and from 40 to 60 mol%, respectively.

The semi-aromatic polyamide resin is preferably polyamide 41, 51, 61, 71, 81, 91, 101, or 6I/6T, more preferably polyamide 41, 51, 61, 71 or 6I/6T, and most preferably polyamide 61, from the viewpoints of the low VOC property and reduction in mold deposits.

The content of the semi-aromatic polyamide resin (B) in the polyacetal resin composition of the present embodiment is preferably 0.01 parts by mass or more and 1.00 parts by mass or less, more preferably 0.01 parts by mass or more and 0.50 parts by mass or less, and even more preferably 0.05 parts by mass or more and 0.50 parts by mass or less, with respect to 100 parts by mass of the polyacetal resin.

The semi-aromatic polyamide resin (B) has a number average molecular weight Mn of 3,000 or more and 20,000 or less, preferably 4,000 or more and 20,000 or less, and even more preferably 5,000 or more and 18,000 or less.

When the molecular weight Mn of the semi-aromatic polyamide resin is within any of the above ranges, thermal decomposition of the polyacetal resin can be prevented and generation of formaldehyde can thus be reduced. In addition, because generation of bleed products of polyamides is reduced, adhesion of mold deposits can be reduced even upon long-time molding.

The semi-aromatic polyamide resin (B) may be a crystalline resin or an amorphous resin. Among these, the semi-aromatic polyamide resin (B) is preferably an amorphous resin (amorphous polyamide) from the viewpoint of color tone.

[Other additives]

In addition to the components described above, the polyacetal resin composition of the present embodiment may further contain other additives, such as well-known additives, e.g., an antioxidant, a formic acid scavenger, a weathering stabilizer, a mold release agent, a lubricant, a conducting agent, a thermoplastic resin, a thermoplastic elastomer, a dye or pigment, and an inorganic or organic filler.

One of these additives may be used alone, or two or more of these additives may be used in combination.

The content of the other additives in the polyacetal resin composition of the present embodiment is preferably 50 parts by mass or less, and more preferably 30 parts by mass or less, with respect to 100 parts by mass of the polyacetal resin.

In particular, the polyacetal resin composition of the present embodiment preferably contains a hindered phenol compound as an antioxidant. Examples of the hindered phenol compound include, but are not limited to: 1,2-bis[3-(4-hydroxy-3,5-di-*t*-butylphenyl)propionyl]hydrazine, *N,N'*-hexamethylene bis[3-(3,5-di-*t*-butyl-4-hydroxyphenyl)propanamide], 1,3,5-tris[[3,5-bis(1,1-dimethylethyl)-4-hydroxyphenyl]methyl]-1,3,5-triazine-2,4,6(1H,3H,5H)-trione, 4-[[4,6-bis(octylthio)-1,3,5-triazin-2-yl]amino]-2,6-di-*t*-butylphenol, *n*-octadecyl-3-(3',5'-di-*t*-butyl-4'-hydroxyphenyl)-propionate, *n*-octadecyl-3-(3'-methyl-5'-*t*-butyl-4'-hydroxyphenyl)-propionate, *n*-tetradecyl-3-(3',5'-di-*t*-butyl-4'-hydroxyphenyl)-propionate, 1,6-hexanediol-bis-[3-(3,5-di-*t*-butyl-4-hydroxyphenyl)-propionate], 1,4-butanediol-bis-[3-(3,5-di-*t*-butyl-4-hydroxyphenyl)-propionate], triethylene glycol-bis-[3-(3-*t*-butyl-5-methyl-4-hydroxyphenyl)-propionate], and pentaerythritol tetrakis [methylene-3-(3',5'-di-*t*-butyl-4'-hydroxyphenyl)propionate]methane. Preferred are triethylene glycol-bis-[3-(3-*t*-butyl-5-methyl-4-hydroxyphenyl)-propionate] and pentaerythritol tetrakis [methylene-3-(3',5'-di-*t*-butyl-4'-hydroxyphenyl)propionate] methane, and more preferred is triethylene glycol-bis-[3-(3-*t*-butyl-5-methyl-4-hydroxyphenyl)-propionate].

The melting point of the hindered phenol compound ranges preferably from 30 °C to 120 °C, more preferably from 50 °C to 120 °C, and even more preferably from 50 °C to 100 °C. When the melting point of the hindered phenol compound is within any of the above ranges, a polyacetal resin composition further excellent in thermal stability can be provided.

The content of the hindered phenol compound contained in the polyacetal resin composition of the present embodiment is preferably from 0.001 to 0.3 parts by mass, more preferably from 0.005 to 0.3 parts by mass, and even more preferably from 0.005 to 0.27 parts by mass, with respect to 100 parts by mass of the polyacetal resin (A). When the content of the hindered phenol compound is within any of the above ranges, a polyacetal resin composition further excellent in thermal stability can be provided.

Examples of the formic acid scavenger include, but are not limited to: hydroxides, inorganic acid salts, carboxylates, or alkoxides of alkali metals or alkaline earth metals. For example, hydroxides of sodium, potassium, magnesium, calcium, or barium; carbonates, phosphates, silicates, borates, carboxylates, as well as layered double hydroxides of the above-described metals, are exemplified.

The carboxylic acid corresponding to carboxylates is preferably a saturated or unsaturated aliphatic carboxylic acid having a carbon number of 10 to 36, and such a carboxylic acid may be substituted with a hydroxyl group. Examples of the saturated or unsaturated aliphatic carboxylate include, but are not limited to: calcium dimyristate, calcium dipalmitate, calcium distearate, calcium myristate, calcium palmitate, calcium stearate, and calcium 12-hydroxydistearate, among which calcium dipalmitate, calcium distearate, and calcium 12-hydroxydistearate are preferred.

One formic acid scavenger may be used alone, or two or more formic acid scavengers may be used in combination.

Preferred weathering stabilizers include, but are not limited to: at least one selected from the group consisting of benzotriazole compounds, oxalic anilide compounds, and hindered amine-based light stabilizers, for example.

Examples of the benzotriazole compounds include, but are not limited to: 2-(2'-hydroxy-5'-methyl-phenyl)benzotriazole, 2-(2'-hydroxy-3,5-di-t-butyl-phenyl)benzotriazole, 2-[2'-hydroxy-3,5-bis($\alpha$,$\alpha$-dimethylbenzyl)phenyl]benzotriazole, 2-(2'-hydroxy-3,5-di-t-amylphenyl)benzotriazole, 2-(2'-hydroxy-3,5-di-isoamylphenyl)benzotriazole, 2-[2'-hydroxy-3,5-bis-($\alpha$,$\alpha$-dimethylbenzyl)phenyl-2H-benzotriazole, 2-(2'-hydroxy-4'-octoxyphenyl)benzotriazole, and 2-(2'-hydroxy-3,5-di-t-butylphenyl)benzotriazole. One of these compounds may be used alone, or two or more of these may be used in combination.

Examples of the oxalic acid alinide compounds include, but are not limited to: 2-ethoxy-2'-ethyl oxalic acid bisanilide, 2-ethoxy-5-t-butyl-2'-ethyl oxalic acid bis-anilide, and 2-ethoxy-3'-dodecyl oxalic acid bis-anilide. One of these compounds may be used alone, or two or more of these may be used in combination.

Examples of the hindered amine-based light stabilizers include, but are not limited to: 4-acetoxy-2,2,6,6-tetramethyl piperidine, 4-stearoyloxy-2,2,6,6-tetramethyl piperidine, 4-acryloyloxy-2,2,6,6-tetramethyl piperidine, 4-(phenylatoxy)-2,2,6,6-tetramethyl piperidine, 4-benzoyloxy-2,2,6,6-tetramethyl piperidine, 4-methoxy-2,2,6,6-tetramethyl piperidine, 4-stearyloxy-2,2,6,6-tetramethyl piperidine, 4-cyclohexyloxy-2,2,6,6-tetramethyl piperidine, 4-benzyloxy-2,2,6,6-tetramethyl piperidine, 4-phenoxy-2,2,6,6-tetramethyl piperidine, 4-(ethylcarbamoyloxy)-2,2,6,6-tetramethyl piperidine, 4-(cyclohexylcarbamoyloxy)-2,2,6,6-tetramethyl piperidine, 4-(phenylcarbamoyloxy)-2,2,6,6-tetramethyl piperidine, bis(2,2,6,6-tetramethyl-4-piperidyl)-carbonate, bis(2,2,6,6-tetramethyl-4-piperidyl)-oxalate, bis(2,2,6,6-tetramethyl-4-piperidyl)-malonate, bis(1,2,2,6,6-pentamethyl-4-piperidinyl)sebacate, bis-(N-methyl-2,2,6,6-tetramethyl-4-piperidinyl)sebacate, bis(2,2,6,6-tetramethyl-4-piperidyl)-sebacate, bis(2,2,6,6-tetramethyl-4-piperidyl)-adipate, bis(2,2,6,6-tetramethyl-4-piperidyl)-terephthalate, 1,2-bis(2,2,6,6-tetramethyl- 4-piperidyloxy)-ethane, $\alpha$,$\alpha$-bis(2,2,6,6-tetramethyl-4-piperidyloxy)-p-xylene, bis(2,2,6,6-tetramethy1-4-piperidyltrilene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate, tris(2,2,6,6-tetramethyl-4-piperidyl)-benzene-1,3,4-tricarboxylate, 1-[2-{3-(3,5-di-t-butyl-4-hydroxyphenyl)propionyloxylbutyl]-4-[3-(3,5-di-t-butyl-4-hydroxyphenyl)propionyloxy] 2,2,6,6-tetramethyl piperidine, a condensate of 1,2,3,4-butanetetracarboxylic acid with 1,2,2,6,6-pentamethyl-4-piperidinol and $\beta$,$\beta$,$\beta$',$\beta$'-tetramethyl-3,9-[2,4,8,10-tetraoxaspiro(5,5)undecane]diethanol, and bis(2,2,6,6-tetramethyl-4-piperidinyl)sebacate. One of the above-described hindered amine-based light stabilizers may be used alone, or two or more of the hindered amine-based light stabilizers may be used in combination.

Among them, preferred weathering stabilizers are 2-[2'-hydroxy-3,5-bis($\alpha$,$\alpha$-dimethylbenzyl)phenyl]benzotriazole, 2-(2'-hydroxy-3,5-di-t-butylphenyl)benzotriazole, 2-(2'-hydroxy-3,5-di-t-amylphenyl)benzotriazole, bis(1,2,2,6,6-pentamethyl-4-piperidinyl)sebacate, bis-(N-methyl-2,2,6,6-tetramethyl-4-piperidinyl)sebacate, bis(2,2,6,6-tetramethyl-4-piperidinyl)sebacate, and a condensate of 1,2,3,4-butanetetracarboxylic acid with 1,2,2,6,6-pentamethyl-4-piperidinol and $\beta$,$\beta$,$\beta$',$\beta$'-tetramethyl-3,9-[2,4,8,10-tetraoxaspiro(5,5)undecane]diethanol.

Preferred examples of the mold release agent and the lubricant include, but are not limited to: alcohols, fatty acids and fatty acid esters thereof, N,N'-ethylenebis fatty acid amides derived from higher fatty acids having a carbon number of 12 to 22, olefin compounds having an average degree of polymerization of 10 to 500, and silicones. One of mold release agents and the lubricants may be used alone, or two or more of these may be used in combination.

Examples of the conducting agent include, but are not limited to: conductive carbon black and metal particles or fibers. One conducting agent may be used alone, or two or more conducting agents may be used in combination.

Examples of the thermoplastic resins include, but are not limited to: polyolefin resins, acrylic resins, styrene resins, polycarbonate resins, and uncured epoxy resins. One thermoplastic resin may be used alone, or two or more thermoplastic resins may be used in combination. Note that the thermoplastic resin shall not include the polyacetal resin and the semi-aromatic polyamide resin which have been described.

Modified products of the above-described resins are also exemplified as the thermoplastic resin.

Examples of the thermoplastic elastomers include, but are not limited to: polyurethane-based elastomers, polyester-based elastomers, polystyrene-based elastomers, and polyamide-based elastomers. One thermoplastic elastomer may be used alone, or two or more thermoplastic elastomers may be used in combination.

Examples of the dye or pigment include, but are not limited to: inorganic pigments, organic pigments, metallic pigments, and fluorescent pigments.

An inorganic pigment refers to one generally used for coloration of resins. Examples thereof include, but are not limited to: zinc sulfide, titanium oxide, barium sulfate, titanium yellow, cobalt blue, calcination pigments, carbonates, phosphates, acetates, carbon black, acetylene black, and lampblack.

Examples of the organic pigments include, but are not limited to: pigments such as condensed uzo-based, ynone-based, phlothacyanine-based, monoazo-based, diazo-based, polyazo-based, anthraquinone-based, heterocyclic, pennone-based, quinacridon-based, thioindigo-based, verylene-based, dioxazine-based, and phthalocyanine-based pigments.

One dye or pigment may be used alone, or two or more dyes or pigments may be used in combination.

The ratio of the dye or pigment added varies significantly depending on color tone, and is therefore difficult to be specifically defined. The ratio, however, typically ranges from 0.05 to 5 parts by mass with respect to 100 parts by mass of the polyacetal resin.

Examples of the inorganic filler include, but are not limited to: fibrous, powdery or particulate, plate-like, and hollow fillers.

Examples of the fibrous filler include, but are not limited to: inorganic fibers including glass fiber, carbon fiber, silica-alumina fiber, zirconia fiber, boron nitride fiber, and potassium titanate fiber, and metal fibers of stainless steel, aluminum, titanium, copper, brass, and the like. In addition, whisker such as potassium titanate whisker and zinc oxide whisker with short fiber lengths are also exemplified.

Examples of the powdery or particulate filler include, but are not limited to: talc, carbon black, silica, quartz powder, glass beads, glass powder, and silicates such as calcium silicate, aluminum silicate, kaolin, clay, diatomaceous earth, and wollastonite; metal oxides such as iron oxide, titanium oxide, and alumina; metal sulfates such as calcium sulfate and barium sulfate; carbonates such as magnesium carbonate and dolomite; and others such as silicon carbide, silicon nitride, boron nitride, and various metal powders.

Examples of the plate-like filler include, but are not limited to: mica, glass flake, and various metal foils.

Examples of the hollow filler include, but are not limited to: glass balloon, silica balloon, Shirasu balloon, and metal balloon.

Examples of the organic filler include, but are not limited to: high-melting point organic fibrous fillers such as those made from an aromatic polyamide resin, a fluoropolymer, or an acrylic resin.

One of these fillers may be used alone, or two or more of these fillers may be used in combination. Although both surface-treated fillers and surface-untreated fillers can be used as the fillers, a filler having a surface which has been treated with a surface treatment agent may be preferred in view of smoothness of the surface of a molded article and the mechanical properties.

The surface treatment agent is not particularly limited, and any of conventionally well-known surface treatment agents can be used.

Examples of the surface treatment agent include, but are not limited to: various coupling agents such as silane-based, titanate-based, aluminum-based, and zirconium-based coupling agents, resin acids, organic carboxylic acids, salts etc. of organic carboxylic acids, and surfactants. Specific examples thereof include, but are not limited to: *N*-(2-aminoethyl)-3-aminopropyl triethoxysilane, 3-glycidoxypropyl trimethoxysilane, isopropyl trisstearoyltitanate, diisopropoxyammonium ethyl acetate, and *n*-butyl zirconate.

[Production method of polyacetal resin composition]

There is no particular limitation on a method of producing the polyacetal resin composition of the present embodiment.

The production method of a polyacetal resin composition of the present embodiment preferably includes, for example, adding, to a polyacetal resin (A), a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less. The polyacetal (A) is exemplified by those described above, and the polyacetal resins similar to those described above are preferred. The semi-aromatic polyamide resin (B) is exemplified by those described above, and the semi-aromatic polyamide resins similar to those described above are preferred.

The polyacetal resin composition can be produced by the production method including, for example, mixing the polyacetal resin (A), the semi-aromatic polyamide resin (B), and certain optional components as described above, using, for example, a HENSCHEL mixer, a tumbler, a V blender, or the like, followed by kneading the mixture using a single screw or multi-screw extruder, a heating roller, a kneader, a Banbury mixer, or the like. Above all, kneading by an extruder equipped with a vent decompression device is preferred from the viewpoints of the thermal stability and the productivity. In addition, for stable production of a large amount of the polyacetal resin composition, a single screw or twin screw extruder is suitably used, in which case, a pelletized polyacetal resin composition (hereinafter referred to as "polyacetal resin pellets") can be produced.

Alternatively, the raw materials may not be pre-mixed, and using a metering feeder or the like, each raw material may be independently and continuously fed or multiple components may be continuously fed by the batch into the extruder.

Alternatively, a high-concentration master batch containing the raw materials may be prepared in advance, and the master batch may be diluted with the polyacetal resin upon melt-kneading and extrusion.

The kneading temperature may be set according to a preferred processing temperature of the polyacetal resin used, which generally ranges from 140 to 260 °C, preferably from 180 to 230 °C.

The method of drying the polyacetal resin pellets produced as described above include, but are not particularly limited to, drying methods using a box dryer (under normal pressure or vacuum), a tunnel and band dryer, a rotary and ventilated rotary dryer, an agitated trough dryer, a fluid bed dryer, a multi-stage disk dryer, a spray dryer, an air flow dryer, an infrared dryer, and a high frequency dryer, etc.

Among these, a box dryer, a rotary and ventilated rotary dryer, an agitated trough dryer, a fluid bed dryer, a multi-stage disk dryer, and an air flow dryer are preferred, and a fluid bed dryer is more preferred from the viewpoint of the productivity.

The drying temperature as the temperature of the heat medium is preferably 80 °C or higher, and more preferably 100 °C or higher. The drying time is preferably from 0 to 10 hours, more preferably from 0 to 6 hours, and even more preferably from 1 to 6 hours, the start time being when the temperature of the polyacetal resin pellets reaches 100 °C or higher.

[Molding of polyacetal resin composition]

The polyacetal resin composition of the present embodiment can be molded to be used as a molded article. The molding method is not particularly limited, and any of known molding methods such as extrusion molding, injection molding, vacuum molding, blow molding, injection compression molding, decoration molding, dual injection molding, gas-assisted injection molding, foam injection molding, low-pressure molding, ultrathin injection molding (ultrahigh-speed injection molding), and in-mold composite molding (insert molding and outsert molding) may be used. Among these, from the viewpoint of the productivity, injection molding is preferable.

Moreover, the polyacetal resin composition of the present embodiment is less likely to contaminate a mold even when continuous molding is carried out using a molding method in which materials are exposed to a high temperature for long time, such as molding by means of a hot runner mold.

[Applications for molded article of polyacetal resin composition]

A molded article of the polyacetal resin composition of the present embodiment is excellent in quality stability and can therefore be used as a molded article for a wide variety of applications. For example, the molded article is used for mechanical parts typified by gears, cams, sliders, levers, shafts, bearings, and guides; outsert-molded resin parts or insert-molded resin parts (chasses, trays, and side plate parts); parts of printers or copiers; parts of digital cameras or digital video devices; parts of music, video, or information devices, parts of communication apparatuses, parts of electrical apparatuses, and parts of electronic apparatuses.

Further, the molded article of the polyacetal resin composition of the present embodiment can be suitably used as an automobile part in fuel-related parts typified by gasoline tanks, fuel pump modules, valves, gasoline tank flanges, and the like; parts related to doors; peripheral parts of seatbelts; combination switch parts; and switches.

Moreover, the molded article of the polyacetal resin composition of the present embodiment also can be suitably used as industrial parts typified by housing equipment.

(Thermal stabilization method of polyacetal resin)

A thermal stabilization method of a polyacetal resin of the present embodiment includes adding, to a polyacetal resin (A), a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

The polyacetal resin is exemplified by those described above, and the polyacetal resins similar to those described above are preferred.

The aromatic polyamide resin is exemplified by those described above, and the aromatic polyamide resins similar to those described above are preferred.

The thermal stabilization method of a polyacetal resin of the present embodiment can be used, for example, to thermally stabilize a polyacetal resin composition produced from a polyacetal resin by the above-described production method of a polyacetal resin composition.

EXAMPLES

The following provides a more specific description of the present embodiment through specific examples by comparing them with comparative examples. However, the present embodiment is not limited to the following examples.

Measurement and evaluation methods employed in the examples and comparative examples will be described.

<Measurement of amount of formaldehyde (HCHO) release from molded article (low VOC property)>

Produced polyacetal resin pellets were molded in accordance with the following molding conditions (a) using a hot runner mold molding machine having the configuration as illustrated in FIG. 1. The amount of released formaldehyde was measured by the VDA275 method given below. (a) Molding conditions

- Injection molding machine: IS-100GN manufactured by Toshiba Machine Co., Ltd.
- Cylinder temperature setting: 220 °C
- Manifold temperature setting: 230 °C (automatic open/close nozzle-type)
- Mold temperature setting: 80 °C
- Mold type: Hot runner type
- Specimen size: 100 × 40 mm × 3 mm (without gas vent section at the tip of the end of a molten resin flow channel, and having a weld section)
- Molding cycle: injection time/cooling time = 30 seconds/15 seconds

Using the method described below (VDA275 method), molded articles up to 5 shots after start of molding were discarded, and the amounts of formaldehyde released from molded articles were measured for the molded article of the 6th shot (this molded article was defined as the initial) and the test specimen of the 5000th shot.

Note: VDA275 Method.

A polyethylene container was charged with 50 mL of distilled water and a test piece in the stipulated size (100 mm × 40 mm × 3 mm). The container was sealed and heated at 60 °C for 3 hours to extract formaldehyde to the distilled water, and was then cooled to room temperature.

After the cooling, 5 mL of a 0.4-mass% aqueous solution of acetylacetone and 5 mL of a 20-mass% aqueous solution of ammonium acetate were added to 5 mL of the distilled water containing formaldehyde to yield a mixed solution, which was heated at 40 °C for 15 minutes to cause a reaction between formaldehyde and acetylacetone.

After the mixed solution was cooled to room temperature, the amount of formaldehyde in distilled water was determined using a UV spectrophotometer on the basis of the absorption peak at 412 nm.

The amount of formaldehyde (mg/kg) released from a molded article was determined by the following formula.

$$\text{Amount of formaldehyde release from molded article (mg/kg)}$$
$$= \text{amount of formaldehyde in distilled water (mg)} \ / \ \text{mass of}$$
$$\text{molded article of polyacetal resin of interest (kg)}$$

From the viewpoint of practicality, the polyacetal resin composition of the present embodiment preferably has a low VOC property of 12 mg/kg or less at the initial and 15 mg/kg or less at the 5000th shot.

Note that "-" in the table indicates that no evaluation was made.

<Mold deposit property>

The produced polyacetal resin pellets were molded in accordance with the following molding conditions (a) using the hot runner mold molding machine having the configuration as illustrated in FIG. 1. The mold deposit property in this operation was evaluated on the basis of criteria (b) given below.

(a) Molding conditions

- Injection molding machine: IS-100GN manufactured by Toshiba Machine Co., Ltd.
- Cylinder temperature setting: 220 °C
- Manifold temperature setting: 230 °C (automatic open/close nozzle-type)
- Mold type: Hot runner type
- Specimen size: 70 × 60 × 3 mm (without gas vent section at the tip of the end of a molten resin flow channel, and having a weld section)
- Molding cycle: injection time/cooling time = 20 seconds / 20 seconds

(b) Evaluation criteria The mold cavity was visually observed after the 1000th and 5000th shots from the start of molding to check whether there was any mold deposits, and evaluations were made on the basis of the following criteria:

Score 1: Deposits were observed in an area of 20% or more of the mold cavity.
Score 2: Deposits were observed in an area of 15% or more and less than 20% of the mold cavity.
Score 3: Deposits were observed in an area of 10% or more and less than 15% of the mold cavity.
Score 4: Deposits were observed in an area of 5% or more and less than 10% of the mold cavity.
Score 5: Deposits were not observed or were observed in an area of less than 5% of the mold cavity.

The constituents of mold deposits are classified into formaldehyde-derived constituents generated due to thermal decomposition of the polyacetal resin and constituents derived from bleed products of low-molecular-weight polyamides. By reducing generation of these two constituents, adhesion of mold deposits can be reduced even upon long-time molding.

From the viewpoint of practicality, the polyacetal resin composition of the present embodiment preferably has a mold deposit property of Score 3 or higher at the 1000th shot and Score 3 or higher at the 5000th shot.

Note that "-" in the table indicates that no evaluation was made.

<Evaluation of number of residing foreign matters>

The molded specimen prepared for the evaluation of the mold deposit property was visually observed and the number of foreign matters on a surface was counted.

The observations were made on the molded articles at the 1st shot and 5000th shot. The number of colored objects of 0.1 mm or longer on one surface of the molded article was counted to be used as the number of foreign matters.

In the polyacetal resin composition of the present embodiment, from the viewpoint of utility, the number of foreign matter is preferably 1 or less at the 1st and 10 or less at the 5000th shot.

Note that "-" in the table indicates that no evaluation was made.

<Warpage property>

Produced polyacetal resin were molded into flat plates using a cold runner mold molding machine in accordance with the following molding conditions (a). The warpage property in this operation was evaluated on the basis of criteria (b) given below.

(a) Molding conditions

- Injection molding machine: SH-75 manufactured by Sumitomo Heavy Industries, Ltd.
- Cylinder temperature setting: 200 °C
- Mold temperature setting: 60 °C
- Mold type: Cold runner type
- Test specimen size: 150 × 150 × 2 mm (without gas vent section at the tip of the end of a molten resin flow channel, and having a weld section)
- Molding cycle: Cooling time = 30 seconds.

(b) Evaluation criteria Each flat plate produced as above was placed on a flat surface so that the gate part faced upward. One of the vertices was fixed, and the amount (height) of warpage between the paired vertices was measured using a height gauge (HDM-A manufactured by Mitutoyo Corporation). The warpage property was evaluated based on the following criteria.

Score 1: The amount of warpage was 16 mm or more.
Score 2: The amount of warpage was 12 mm or more and less than 16 mm.
Score 3: The amount of warpage was 8 mm or more and less than 12 mm.
Score 4: The amount of warpage was 4 mm or more and less than 8 mm.
Score 5: The amount of warpage was less than 4 mm.

A higher score of warpage property provides a higher productivity of injection molding as well as a higher yield of molding. When the score is 1 or 2, the productivity of continuous injection molding is reduced, leading to a low yield.

[Raw materials]

The raw materials used in examples and comparative examples are as follows.

<(A) Polyacetal resin>

A-1. Polyacetal homopolymer

A polymerization reactor equipped with a stirring blade was filled with *n*-hexane, and purified formaldehyde gas (water content: 110 ppm), a polymerization catalyst (dimethyl distearyl ammonium acetate), and a molecular weight modifier (acetic anhydride) were independently and continuously fed to the reactor to induce a polymerization reaction.

The polymerization reaction temperature at this step was set to 58 °C.

The resultant crude polyacetal homopolymer was charged into a reaction vessel filled with a 1:1 mixture of *n*-hexane/acetic anhydride, and the reaction was stirred at 150 °C for 2 hours to esterify unstable ends of the crude polyacetal homopolymer.

In this step, the mass ratio (slurry concentration) of the polymer to the 1:1 mixture of *n*-hexane/acetic anhydride was 20 of the polymer to 100 of 1:1 mixture of *n*-hexane/acetic anhydride.

After the terminal stabilization treatment on the polyacetal homopolymer, the 1:1 mixture of *n*-hexane/acetic anhydride and the polyacetal homopolymer were removed from the reaction vessel, and the polyacetal homopolymer was repeatedly washed with *n*-hexane solvent to remove acetic anhydride.

The washing was repeated until the concentration of acetic anhydride in the polyacetal homopolymer was reduced to 10 mass ppm or less.

Thereafter, the polyacetal homopolymer was dried under reduced pressure of -700 mmHg at 120 °C for 3 hours to remove the *n*-hexane solvent used for washing, and was then dried using a heating type dryer set at 120 °C for 5 hours to remove water contained in the polyacetal homopolymer. A powdery polyacetal homopolymer (A-Ia) having an MFR of 10 g/10 min and an Mn of 78,000 (average particle diameter: 200 $\mu$m) was obtained.

The average particle size of the polyacetal polymer was measured by a laser diffraction particle size analyzer.

(A-Ib) A powdery polyacetal homopolymer having an MFR of 22 g/10 min and an Mn of 64,000 was obtained by procedures similar to the procedures of A-Ia.

A-2. Polyacetal copolymer

Tenac 3510 manufactured by Asahi Kasei Corporation was used. The MFR was 2.7 g/10 min, and the Mn was 28,000.

<(B) Semi-aromatic polyamide resin>

B-1. Polyamide 6I

A polymerization reaction of polyamide was carried out by the thermal melting polymerization method as follows.

A homogeneous aqueous solution containing 50.19 mass% of raw monomers was prepared by dissolving, to 1500 g of distilled water, 1500 g of equimolar salts of isophthalic acid and hexamethylene diamine and 1.5 mol% of adipic acid per 100 moles of isophthalic acid.

The solution was concentrated by gradually venting water vapor until the concentration of the solution reached 70 mass% while stirring at a temperature of 110 to 150 °C. The internal temperature was then raised to 220 °C. At this time, the autoclave was pressurized to 1.8 MPa. A reaction was caused to take place for 1 hour while the pressure was maintained to 1.8 MPa until the internal temperature reached 245 °C by gradually venting water vapor.

The pressure was then lowered over 30 minutes. The interior of the autoclave was then maintained to a reduced pressure of 650 torr for 10 minutes using a vacuum apparatus. At this time, the final internal temperature of the polymerization was 265 °C.

The polyamide was then extruded by pressurizing with nitrogen through a lower spinneret (nozzle) into strands, which were water-cooled, cut, and discharged in the form of pellets, and dried at 100 °C under a nitrogen atmosphere for 12 hours. The Mn was 3,760 and the Mw/Mn was 2.0.

B-2. Polyamide 6I having a molecular weight Mn of 5,380 was used as the polyamide. This polyamide 6I is a polyamide consisting of a dicarboxylic acid unit containing 100 mol% of an isophthalic acid unit, and a diamine unit containing 100 mol% of a hexamethylene diamine unit having a carbon number of 6.

B-3. Polyamide 6I having a molecular weight Mn of 16,046 was used as the polyamide. This polyamide 6I is a polyamide consisting of a dicarboxylic acid unit containing 100 mol% of an isophthalic acid unit, and a diamine unit containing 100 mol% of a hexamethylene diamine unit having a carbon number of 6.

B-4. Polyamide 6I having a molecular weight Mn of 18,739 was used as the polyamide. This polyamide 6I is a polyamide consisting of a dicarboxylic acid unit containing 100 mol% of an isophthalic acid unit, and a diamine unit containing 100 mol% of a hexamethylene diamine unit having a carbon number of 6.

B-5. Grivory G16 manufactured by EMS was used as polyamide 6I/6T. The molecular weight Mn was 8,247. This polyamide 6I/6T is a polyamide consisting of 100 mol% of a dicarboxylic acid unit consisting of an isophthalic acid unit and a terephthalic acid unit (the content of the isophthalic acid unit was less than 75 mol%), and a diamine unit containing 100 mol% of a diamine unit having a carbon number of 4 to 10.

B-6. Reny MXD6 manufactured by Mitsubishi Gas Chemical Company, Inc. was used as MXD6. The molecular weight Mn was 30,500. This MXD6 is a polyamide consisting of a dicarboxylic acid unit containing 0 mol% an isophthalic acid unit, and a diamine unit containing 100 mol% of a diamine unit having a carbon number of 4 to 10.

B-7. Polyamide 66 having a molecular weight Mn of 15,766 was used as the polyamide. This polyamide 66 is a polyamide consisting of a dicarboxylic acid unit containing 0 mol% an isophthalic acid unit, and a diamine unit containing 100 mol% of a diamine unit having a carbon number of 4 to 10.

B-8. Polyamide 12 having a molecular weight Mn of 11,572 was used as the polyamide. The polyamide 12 is a polyamide containing 0 mol% of an isophthalic acid unit and 0 mol% of a diamine unit having a carbon number of 4 to 10.

[Example 1]

Using a HENSCHEL mixer, 100 parts by mass of the powdered polyacetal homopolymer (A-1), which was the polyacetal resin produced as above, 0.01 parts by mass of the polyamide 61 (B-2), and 0.15 parts by mass of triethylene glycol bis-[3-(3-*t*-butyl-5-methyl-4-hydroxyphenyl)-propionate] as a hindered phenol antioxidant were uniformly mixed to yield a mixture.

This mixture was fed from the top feed opening of a twin screw extruder set to 200 °C, which was equipped with a 40-mm vent and had a ratio of L (screw length) / D (screw inner diameter) of 48. The mixture was melt-kneaded at a screw speed of 200 rpm, a vent decompression degree of -0.08 MPa, and a discharge rate of 50 kg/hr. After pelletization by the hot cutting method at the outlet of the extruder die, the pellets were charged into warm water adjusted to 40 °C, and stirring was carried out for a certain period of time. After water was removed in a centrifuge, the pellets were fed into a fluidized bed hot air dryer to be dried at a hot air temperature of 150 °C for 3 hours to obtain polyacetal resin pellets.

The amount of formaldehyde released from a molded piece of the resultant polyacetal resin pellets, the mold deposit property, and the number of foreign matters were evaluated by the methods described above.

The evaluation results are listed in Table 1.

[Examples 2 to 28 and Comparative Examples 1 to 13]

Polyacetal resin pellets were produced in the same manner as in Example 1 above, except that the type of the polyacetal resin (A) and the type and the amount of the semi-aromatic polyamide resin (B) were changed to the values summarized in Table 1 below.

The low VOC property, the mold deposit property, and the number of foreign matters were evaluated from a molded piece of the polyacetal resin pellets produced by the method described above.

For the compositions obtained in Example 9, Example 18, Comparative Example 1, Comparative Example 7, Comparative Example 11, and Comparative Example 12, the respective warpage properties were evaluated by the method described above. The results are summarized in Table 2.

Table 1

| | Composition | | | | | Evaluations | | | | | |
|---|---|---|---|---|---|---|---|---|---|---|---|
| | Polyacetal resin (A) | | (B) Polyamide | | | Low VOC | | Mold deposit property | | Number of foreign matters | |
| | Type | Number average molecular weight | Structure | Mn | Amount added (phr) | Initial | 5000th shot | 1000th shot | 5000th shot | 1st shot | 5000th shot |
| | | Mn | | | | Mg/kg | Mg/kg | Score | Score | Individual | Count |
| Comparative Example 1 | Polyacetal homopolymer (A-Ia) | 78,000 | N/A | | | 42 | - | 2 | - | 0 | - |
| Example 1 | | | PA6I | 3760 | 0.01 | 6 | 12 | 3 | 1 | 0 | 7 |
| Example 2 | | | | | 0.25 | 3 | 4 | 3 | 1 | 0 | 4 |
| Example 3 | | | | | 1.00 | 5 | 8 | 3 | 1 | 0 | 5 |
| Example 4 | | | | 5380 | 0.01 | 9 | 13 | 5 | 3 | 0 | 3 |
| Example 5 | | | | | 0.25 | 4 | 5 | 5 | 5 | 0 | 6 |
| Example 6 | | | | | 0.50 | 6 | 8 | 5 | 5 | 0 | 7 |
| Example 7 | | | | | 1.00 | 9 | 12 | 5 | 4 | 0 | 9 |
| Example 8 | | | | 16046 | 0.01 | 10 | 13 | 5 | 3 | 0 | 6 |
| Example 9 | | | | | 0.25 | 5 | 8 | 5 | 5 | 0 | 3 |
| Example 10 | | | | | 0.50 | 8 | 11 | 5 | 4 | 0 | 5 |
| Example 11 | | | | | 1.00 | 11 | 13 | 5 | 4 | 0 | 10 |
| Example 12 | | | | 18739 | 0.01 | 10 | 14 | 5 | 3 | 0 | 4 |
| Example 13 | | | | | 0.25 | 6 | 9 | 5 | 4 | 0 | 4 |
| Example 14 | | | | | 0.50 | 9 | 12 | 5 | 4 | 0 | 8 |
| Example 15 | | | | | 1.00 | 12 | 15 | 5 | 4 | 0 | 15 |

| | Composition | | | | | Evaluations | | | | | |
| | Polyacetal resin (A) | | (B) Polyamide | | | Low VOC | | Mold deposit property | | Number of foreign matters | |
| | Type | Number average molecular weight | Structure | Mn | Amount added (phr) | Initial | 5000th shot | 1000th shot | 5000th shot | 1st shot | 5000th shot |
| | | Mn | | | | Mg/kg | Mg/kg | Score | Score | Individual | Count |
| Comparative Example 2 | | | P A6I/6T 67/33 | 8247 | 0.01 | 32 | 45 | 2 | 1 | 0 | 2 |
| Comparative Example 3 | | | | | 0.25 | 35 | 48 | 4 | 2 | 0 | 9 |
| Comparative Example 4 | | | | | 0.50 | 33 | 43 | 4 | 2 | 0 | 4 |
| Comparative Example 5 | | | MXD6 | 30500 | 0.25 | 27 | - | 4 | 2 | 0 | 26 |
| Comparative Example 6 | | | | | 0.50 | 36 | - | 4 | 2 | 0 | 31 |
| Comparative Example 7 | | | PA66 | 15766 | 0.25 | 32 | - | 2 | 1 | 0 | 35 |
| Comparative Example 8 | | | | | 0.50 | 35 | - | 2 | 1 | 0 | 44 |
| Comparative Example 9 | | | PA12 | 11572 | 0.25 | 10 | 15 | 3 | 1 | 0 | 27 |
| Comparative Example 10 | | | | | 0.50 | 8 | 14 | 4 | 2 | 0 | 32 |
| Comparative Example 11 | | | None | | | 33 | - | 2 | - | 0 | - |

EP 3 981 834 A1

(continued)

| | Composition | | | | | Evaluations | | | | | |
|---|---|---|---|---|---|---|---|---|---|---|---|
| | Polyacetal resin (A) | | (B) Polyamide | | | Low VOC | | Mold deposit property | | Number of foreign matters | |
| | Type | Number average molecular weight | Structure | Mn | Amount added (phr) | Initial | 5000th shot | 1000th shot | 5000th shot | 1st shot | 5000th shot |
| | | Mn | | | | Mg/kg | Mg/kg | Score | Score | Individual | Count |
| Example 16 | Polyacetal homopolymer (A-1b) | 64,000 | PA-6I | 3760 | 0.25 | 7 | 10 | 4 | 1 | 0 | 9 |
| Example 17 | | | | 5380 | 0.25 | 7 | 9 | 5 | 4 | 0 | 6 |
| Example 18 | | | | 16046 | 0.25 | 8 | 12 | 5 | 4 | 0 | 9 |
| Example 19 | | | | 18739 | 0.25 | 10 | 13 | 5 | 4 | 0 | 7 |
| Comparative Example 12 | | | PA66 | 15766 | 0.25 | 26 | - | 2 | 1 | 0 | - |
| Comparative Example 13 | Polyacetal copolymer (A-2) | 28,000 | None | | | 16 | - | 3 | 1 | 0 | - |
| Example 20 | | | PA6I | 3760 | 0.01 | 4 | 8 | 3 | 1 | 0 | 4 |
| Example 21 | | | | 3760 | 0.25 | 3 | 5 | 3 | 2 | 0 | 3 |
| Example 22 | | | | 3760 | 1.00 | 2 | 5 | 3 | 1 | 0 | 3 |
| Example 23 | | | | 5380 | 0.01 | 4 | 6 | 5 | 4 | 1 | 5 |
| Example 24 | | | | 5380 | 0.25 | 2 | 3 | 5 | 5 | 0 | 4 |
| Example 25 | | | | 5380 | 1.00 | 3 | 5 | 5 | 5 | 0 | 9 |
| Example 26 | | | | 18739 | 0.01 | 7 | 11 | 5 | 4 | 0 | 4 |
| Example 27 | | | | 18739 | 0.25 | 4 | 7 | 5 | 4 | 0 | 3 |
| Example 28 | | | | 18739 | 1.00 | 9 | 11 | 5 | 4 | 0 | 10 |

Tabel 2

| | Polyacetal resin (A) | | (B) Polyamide | | | Warpage property |
|---|---|---|---|---|---|---|
| | Type | Number average molecular weight Mn | Structure | Mn | Amount added (phr) | Score |
| Comparative Example 14 | Polyacetal homopolymer (A-la) | 78,000 | N/A | | | 3 |
| Example 29 | | | PA-6I | 16046 | 0.25 | 5 |
| Comparative Example 15 | | | PA66 | 15766 | 0.25 | 2 |
| Comparative Example 16 | Polyacetal homopolymer (A-lb) | 64,000 | N/A | | | 3 |
| Example 30 | | | PA-6I | 16046 | 0.25 | 3 |
| Comparative Example 17 | | | PA66 | 15766 | 0.25 | 3 |

As summarized in Table 1, it was found that the molded articles made of the polyacetal resin compositions obtained in Examples 1 to 28 had low formaldehyde release in the long-time continuous molding, and that mold deposits and occurrence of foreign matters due to residence were significantly reduced. Moreover, the polyacetal resin composition of Example 9 had particularly remarkable reduced warpage.

In contrast, it was confirmed that the molded articles made from the polyacetal resin compositions obtained in Comparative Examples 1 to 13 had high formaldehyde release in the long-time continuous molding, and that reduction in both mold deposits and foreign matters due to residence was difficult.

INDUSTRIAL APPLICABILITY

The polyacetal resin composition of the present disclosure can be suitably used in a wide range of fields such as the automotive industry, electrical and electronic industries, and other industries.

**Claims**

1.   A polyacetal resin composition comprising:

a polyacetal resin (A); and
a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

2.   The polyacetal resin composition according to claim 1, wherein a content of the semi-aromatic polyamide resin (B) is 0.01 part by mass or more and 1.00 part by mass or less with respect to 100 parts by mass of the polyacetal resin (A).

3.   The polyacetal resin composition according to claim 1 or 2, wherein the semi-aromatic polyamide resin (B) is an amorphous polyamide.

4.   The polyacetal resin composition according to any one of claims 1 to 3, wherein the polyamide resin (B) is polyamide 61.

5.   The polyacetal resin composition according to any one of claims 1 to 4, wherein the semi-aromatic polyamide (B) has a number average molecular weight Mn of 5,000 or more and 20,000 or less.

6.   The polyacetal resin composition according to any one of claims 1 to 5, wherein the polyacetal resin (A) has a number average molecular weight Mn of is 75,000 or more and 150,000 or less.

7. The polyacetal resin composition according to any one of claims 1 to 6, wherein the polyacetal resin (A) is a polyacetal homopolymer.

8. The polyacetal resin composition according to any one of claims 1 to 7, wherein the polyacetal resin composition contains 0.01 parts by mass or more and 0.50 parts by mass of the polyamide resin (B) with respect to 100 parts by mass of the polyacetal resin (A).

9. A production method of a polyacetal resin composition comprising:
adding, to a polyacetal resin (A), a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

10. A thermal stabilization method of a polyacetal resin comprising:
adding, to a polyacetal resin (A), a semi-aromatic polyamide resin (B) which contains a dicarboxylic acid unit containing 75 mol% or more of an isophthalic acid unit, and a diamine unit containing 50 mol% or more of a diamine unit having a carbon number of 4 to 10, and has a number average molecular weight Mn of 3,000 or more and 20,000 or less.

# FIG. 1

Hot runner mold

Open/close nozzle rod at end of
molten resin flow channel

Charging of polyacetal resin pellet

Molded article
(product)

Valve open/
close unit

Hot runner gate

Injection molding machine

Manifold section
(molten resin flow channel)

Temperature controller
for hot runner section

EP 3 981 834 A1

## INTERNATIONAL SEARCH REPORT

International application No.

PCT/JP2020/022718

**A. CLASSIFICATION OF SUBJECT MATTER**
C08L 59/00(2006.01)i; C08L 77/06(2006.01)i
FI: C08L59/00; C08L77/06
According to International Patent Classification (IPC) or to both national classification and IPC

**B. FIELDS SEARCHED**

Minimum documentation searched (classification system followed by classification symbols)
C08L59/00; C08L77/06

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2008-527128 A (BASF SE) 24.07.2008 (2008-07-24) claims 1, 4, 16, 18, paragraphs [0011], [0016], [0018]-[0019], [0042]-[0043] | 1-10 |
| X | JP 50-145458 A (E. I. DU PONT DE NEMOURS AND COMPANY) 21.11.1975 (1975-11-21) claims, page 2, lower right column, lines 2-5, examples 5-3, 7-18 | 1-10 |
| A | JP 2003-277594 A (TORAY INDUSTRIES, INC.) 02.10.2003 (2003-10-02) | 1-10 |
| A | JP 63-110245 A (TORAY INDUSTRIES, INC.) 14.05.1988 (1988-05-14) | 1-10 |
| A | JP 2013-032416 A (MITSUBISHI GAS CHEMICAL CO., INC.) 14.02.2013 (2013-02-14) | 1-10 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 August 2020 (19.08.2020) | 01 September 2020 (01.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/022718

| Patent Documents referred in the Report | Publication Date | Patent Family | Publication Date |
|---|---|---|---|
| JP 2008-527128 A | 24 Jul. 2008 | WO 2006/074922 A1 claims 1, 4, 16, 18, paragraphs [0011], [0021], [0023]-[0024], [0047]-[0048] EP 1841823 A1 KR 10-2007-0105995 A CN 101103075 A US 2008/0121847 A1 | |
| JP 50-145458 A | 21 Nov. 1975 | US 3960984 A claims, column 2, lines 11-15, examples 5-3, 7-18 | |
| JP 2003-277594 A | 02 Oct. 2003 | (Family: none) | |
| JP 63-110245 A | 14 May 1988 | (Family: none) | |
| JP 2013-032416 A | 14 Feb. 2013 | (Family: none) | |

Form PCT/ISA/210 (patent family annex) (January 2015)

**EP 3 981 834 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S50145458 A
- JP 2013032416 A